# EUROPEAN PATENT APPLICATION

(11) **EP 4 686 643 A1**
(43) Date of publication of application: **04.02.2026**
(21) Application number: 25156550.3
(22) Date of filing: 07.02.2025
(51) Int. Cl.: B62D 25/16

(54) **FENDER ASSEMBLY AND VEHICLE**

(30) Priority: 31.07.2024 CN 202411046521
(71) Applicant: Xiaomi EV Technology Co., Ltd., 100176 Beijing (CN)
(72) Inventor: ZHAO, Jing, Beijing, 100176 (CN)
(74) Representative: Stöckeler, Ferdinand

(57) **Abstract**

A fender assembly (10) includes a fender bracket and a fender, the fender bracket includes a first connecting portion and a second connecting portion; the fender includes a first fixing portion and a second fixing portion, the first fixing portion is connected to the first connecting portion and the second fixing portion is connected to the second connecting portion. The fender bracket and the fender form a ring-shaped structure. A vehicle including a longitudinal beam (20) is also provided. The fender assembly (10) is connected to the longitudinal beam (20).

## Description

### FIELD

The present invention relates to the technical field of vehicles, and in particular to a fender assembly and a vehicle.

### BACKGROUND

With the development of new energy vehicles, consumers have higher and higher requirements for vehicle appearance, for example, mounting tolerances of a fender. In the related technology, in order to ensure the stiffness at the mounting points of the fender, the mounting points of the fender are provided at different fender brackets.

### SUMMARY

The present invention provides a fender assembly to improve the production efficiency of a vehicle.

The invention is set out in the appended set of claims.

A fender assembly in a first aspect of the present invention includes a fender bracket and a fender, the fender bracket includes a first connecting portion and a second connecting portion; the fender includes a first fixing portion and a second fixing portion, the first fixing portion is connected to the first connecting portion, and the second fixing portion is connected to the second connecting portion; in which the fender bracket and the fender form a ring-shaped structure.

Optionally, the fender bracket includes a third connecting portion, the first connecting portion is connected to the second connecting portion by the third connecting portion, and the third connecting portion is configured to be connected to a longitudinal beam.

Optionally, the first connecting portion, the second connecting portion and the third connecting portion are in a shape of a plate, an extension direction of the first connecting portion and an extension direction of the second connecting portion intersect an extension direction of the third connecting portion, and the first connecting portion and the second connecting portion are provided at the same side of the third connecting portion in a thickness direction of the third connecting portion.

Optionally, the fender bracket further includes a first reinforcing portion and a second reinforcing portion, the first reinforcing portion is connected to the first connecting portion, the second reinforcing portion is connected to the second connecting portion, and the first reinforcing portion and the second reinforcing portion are stacked and connected.

Optionally, the first reinforcing portion is welded to the second reinforcing portion; and/or, the first reinforcing portion is connected to a side of the first connecting portion in a first direction, the first fixing portion is connected to a side of the first connecting portion in a second direction, the second reinforcing portion is connected to a side of the second connecting portion in the first direction, the second fixing portion is connected to a side of the second connecting portion in the second direction, and the first direction intersects the second direction.

Optionally, at least one of the first connecting portion, the second connecting portion and the third connecting portion is provided with a reinforcing rib.

Optionally, the third connecting portion is provided with a longitudinal beam connecting hole configured to be connected to the longitudinal beam, the longitudinal beam connecting hole is configured for a connecting member to pass through, and a size of the longitudinal beam connecting hole is larger than a diameter of the connecting member.

Optionally, the first connecting portion is connected to the first fixing portion by a first fastener, the first connecting portion is provided with a first connecting hole configured for the first fastener to pass through, a size of the first connecting hole is larger than the diameter of the first fastener; and/or, the second connecting portion is connected to the second fixing portion by a second fastener, the second connecting portion is provided with a second connecting hole configured for the second fastener to pass through, a size of the second connecting hole is larger than a diameter of the second fastener.

Optionally, the fender bracket defines a cavity, the cavity has a first opening and a second opening, the fender blocks the first opening, and the second opening is configured to face a headlamp of the vehicle.

Optionally, the first connecting portion is provided with a headlamp connecting portion configured to be connected to the headlamp.

Optionally, a side of the first connecting portion facing the second opening is provided with an avoiding portion configured to avoid the headlamp.

Optionally, at least two headlamp connecting portions are provided, and at least one the headlamp connecting portions is connected to the first fixing portion.

Optionally, the first connecting portion is provided with a trim plate connecting portion configured to be connected to a trim plate.

Optionally, the fender includes a fender body and a fender reinforcing plate, the fender body is connected to the fender reinforcing plate, and at least one of the first fixing portion and the second fixing portion is provided at the fender reinforcing plate.

Optionally, a part of the fender body and a part of the fender reinforcing plate are stacked and connected.

Optionally, a part of the fender body stacked with the fender reinforcing plate forms a fender connecting portion, and the first fixing portion and the second fixing portion are both provided at a side of the fender connecting portion facing the fender bracket.

The present invention further provides a vehicle.

A vehicle in a second aspect of the present invention includes a fender assembly and a longitudinal beam, the fender assembly is the fender assembly described in any one of above items; the fender bracket is connected to the longitudinal beam.

Optionally, the longitudinal beam is tube-shaped; and/or, the longitudinal beam includes a longitudinal beam mounting plate and a longitudinal beam reinforcing plate, the longitudinal beam reinforcing plate and the longitudinal beam mounting plate are stacked and connected, and the fender bracket is connected to the longitudinal beam mounting plate.

The fender assembly of the present invention realizes the connection between the fender and the fender bracket by providing a first connecting portion and a second connecting portion at the fender bracket, providing a first fixing portion and a second fixing portion at the fender, and utilizing the first fixing portion to connect with the first connecting portion and the second fixing portion to connect with the second connecting portion. By forming the fender bracket and the fender into a ring-shaped structure, the stiffness of the fender assembly is great, the stiffness at the fender mounting points can be better satisfied, and the fender mounting points can be provided at the same fender bracket, reducing the debugging difficulty in the process of mounting the fender, and improving the production efficiency of the vehicle.

### BRIEF DESCRIPTION OF THE DRAWINGS

FIG. 1 is a schematic diagram of a connecting structure of a fender assembly and a longitudinal beam of an embodiment of the present invention.
FIG.2 is a sectional diagram of a connecting structure of a fender assembly and a longitudinal beam of an embodiment of the present invention.
FIG.3 is a schematic diagram of an exploded structure of a fender assembly and a longitudinal beam of an embodiment of the present invention.
FIG.4 is a perspective view of a fender bracket in the fender assembly of an embodiment of the present invention.
FIG. 5 is a perspective view of another view of a fender bracket in a fender assembly of an embodiment of the present invention.

### Reference numbers:

10, fender assembly;
1, fender bracket; 11, first connecting portion; 111, first connecting hole; 112, headlamp connecting portion; 113, avoiding portion; 114, trim plate connecting portion; 12, second connecting portion; 121, second connecting hole; 13, third connecting portion; 131, longitudinal beam connecting hole; 14, first reinforcing portion; 15, second reinforcing portion; 16, reinforcing rib; 17, cavity; 171, first opening; 172, second opening;
2, fender; 21, fender body; 211, first fixing portion; 22, fender reinforcing plate; 221, second fixing portion; 23, fender connecting portion;
3, connecting member;
4, second fastener;
20, longitudinal beam; 201, longitudinal beam mounting plate; 202, longitudinal beam reinforcing plate; 203, longitudinal beam connecting plate.

### DETAILED DESCRIPTION

Embodiments of the present invention are described in detail below, and examples of the embodiments are shown in the drawings. The embodiments described below by reference to the drawings are illustrative and are intended to be used to explain the present invention and are not to be construed as a limitation of the present invention.

In the related art, a fender of a vehicle is connected to a longitudinal beam by a plurality of fender brackets, the fender, the plurality of fender brackets, and the longitudinal beam together form a ring-shaped structure. Moreover, each fender bracket is provided with a mounting point of the fender, i.e., the mounting points of the fender are provided at different fender brackets, with the result that debugging difficulty is great in the process of mounting a fender and the production efficiency of the vehicle is affected.

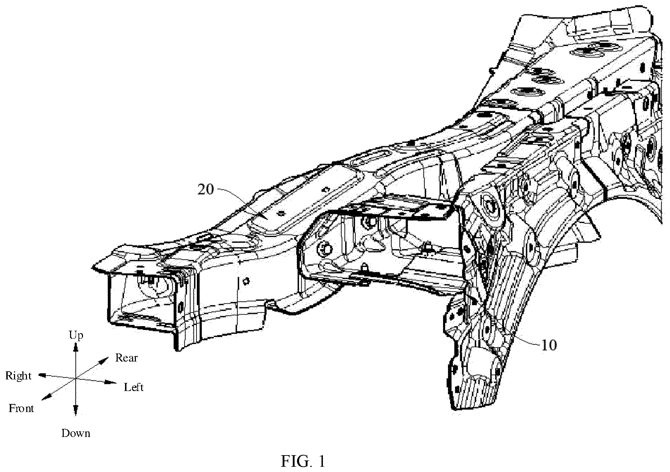

As shown in FIGS. 1 to 3, the fender assembly 10 of an embodiment of the present invention includes a fender bracket 1 and a fender 2, the fender bracket 1 includes a first connecting portion 11 and a second connecting portion 12, and the fender 2 includes a first fixing portion 211 and a second fixing portion 221, the first fixing portion 211 is connected to the first connecting portion 11, and the second fixing portion 221 is connected to the second connecting portion 12. The fender bracket 1 and the fender 2 form a ring-shaped structure.

The fender assembly 10 of embodiments of the present invention realizes the connection of the fender 2 and the fender bracket 1 by providing the first connecting portion 11 and the second connecting portion 12 at the fender bracket 1 and providing the first fixing portion 211 and the second fixing portion 221 at the fender 2, and utilizing the first fixing portion 211 to connect with the first connecting portion 11 and the second fixing portion 221 to connect with the second connecting portion 12. By forming the fender bracket 1 and the fender 2 into a ring-shaped structure, the stiffness of the fender assembly 10 is great, the stiffness at mounting points of the fender 2 can be better satisfied, and the mounting points of the fender 2 can be provided at the same fender bracket 1, reducing the debugging difficulty in the process of mounting the fender 2, and improving the production efficiency of the vehicle.

In some embodiments, as shown in FIGS. 1 to 3, the fender bracket 1 includes a third connecting portion 13, the first connecting portion 11 is connected to the second connecting portion 12 by the third connecting portion 13, and the third connecting portion 13 is configured to be connected to the longitudinal beam 20.

By providing the third connecting portion 13 at the fender bracket 1 and utilizing the third connecting portion 13 to connect with the longitudinal beam 20, the mounting point of the fender 2 and the mounting point of the longitudinal beam 20 are integrated at the fender bracket 1, the development cost of a part or component of the vehicle can be reduced, the development cycle and production cycle of the fender assembly 10 are shorten, and the production efficiency of the vehicle is further improved. In addition, by adjusting the relative position of the fender bracket 1 and the longitudinal beam 20, position adjustment between the fender 2 and the longitudinal beam 20 can be realized, facilitating gap and flush adjustment of the fender 2.

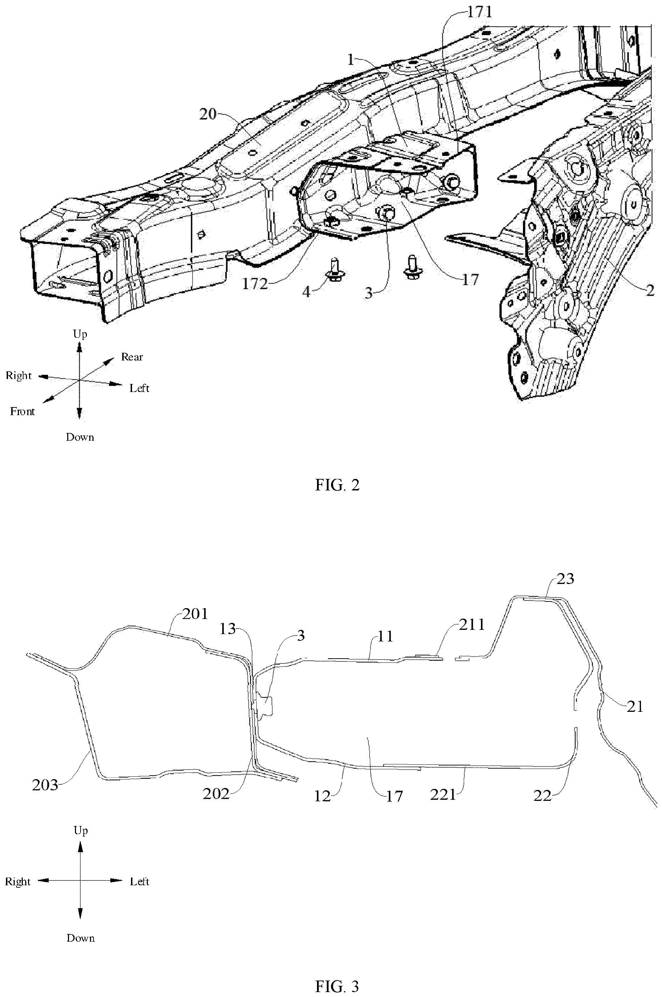

Optionally, as shown in FIGS. 3 to 5, the first connecting portion 11, the second connecting portion 12 and the third connecting portion 13 are all in a shape of a plate. That is, the first connecting portion 11, the second connecting portion 12 and the third connecting portion 13 are all connecting plates. An extension direction of the first connecting portion 11 and an extension direction of the second connecting portion 12 intersect an extension direction of the third connecting portion 13, and the first connecting portion 11 and the second connecting portion 12 are provided at the same side of the third connecting portion 13 in a thickness direction of the third connecting portion 13.

For example, as shown in FIGS. 1 and 3, the extension direction of the first connecting portion 11 and the extension direction of the second connecting portion 12 are the same as a left-right direction, the extension direction of the third connecting portion 13 is the same as an up-down direction, and the thickness direction of the third connecting portion 13 is the same as the left-right direction. The first connecting portion 11 and the second connecting portion 12 are both provided at a left side of the third connecting portion 13, and the fender 2 is provided at a left side of the fender bracket 1. The first connecting portion 11 is provided at an upper side of the second connecting portion 12.

By setting the first connecting portion 11, the second connecting portion 12 and the third connecting portion 13 to be all in a shape of a plate, a stiffness of the fender bracket 1 itself is high, so that the fender bracket 1 can bear a large force when the automated equipment is used to realize the connection of the fender bracket 1 to other parts and components, and the impact on the appearance size of the entire vehicle due to the deformation of the fender bracket 1 is reduced.

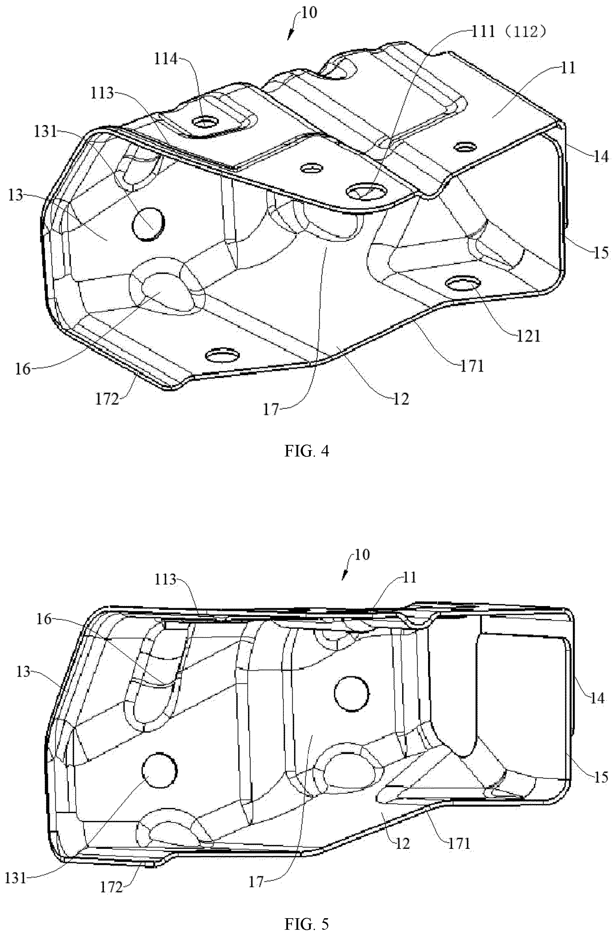

Optionally, as shown in FIGS. 4 and 5, the fender bracket 1 further includes a first reinforcing portion 14 and a second reinforcing portion 15, and the first reinforcing portion 14 and the second reinforcing portion 15 are stacked and connected. The first reinforcing portion 14 is connected to the first connecting portion 11, and the second reinforcing portion 15 is connected to the second connecting portion 12.

By providing the first reinforcing portion 14 connected to the first connecting portion 11 and the second reinforcing portion 15 connected to the second connecting portion 12, and rendering the first reinforcing portion 14 and the second reinforcing portion 15 to be stacked and connected, the utilization of the first reinforcing portion 14 and the second reinforcing portion 15 can improve the stiffness of the fender bracket 1 itself, and reduce the impact on the appearance size of the entire vehicle due to the deformation of the fender bracket 1.

Optionally, as shown in FIGS. 3 to 5, the first reinforcing portion 14 is connected to a side of the first connecting portion 11 in a first direction, the first fixing portion 211 is connected to a side of the first connecting portion 11 in a second direction, the second reinforcing portion 15 is connected to a side of the second connecting portion 12 in the first direction, the second fixing portion 221 is connected to a side of the second connecting portion 12 in the second direction, and the first direction intersects the second direction .

For example, as shown in FIGS. 3 to 5, the first direction is the same as a front-rear direction and the second direction is the same as the up-down direction. The first reinforcing portion 14 is connected to a rear side of the first connecting portion 11, and the first fixing portion 211 is connected to an upper side of the first connecting portion 11. The second reinforcing portion 15 is connected to a rear side of the second connecting portion 12, and the second fixing portion 221 is connected to a lower side of the second connecting portion 12.

As a result, the fender bracket 1 has a box-shaped structure as a whole, which can effectively improve the stiffness of the fender bracket 1 itself, so that the stiffness of the fender assembly 10 is great, avoiding ultimate impacts on the appearance size of the vehicle because of deformation of the fender bracket 1 due to excessive force when the automated equipment is used.

Optionally, the first reinforcing portion 14 is welded to the second reinforcing portion 15.

For example, the first reinforcing portion 14 and the second reinforcing portion 15 are both reinforcing plates, and the first reinforcing portion 14 and the second reinforcing portion 15 employ laser welding.

By welding the first reinforcing portion 14 and the second reinforcing portion 15, the connection stiffness of the first reinforcing portion 14 and the second reinforcing portion 15 can be improved, the stiffness of the fender bracket 1 itself can be further improved, and the impact on the appearance size of the entire vehicle due to deformation of the fender bracket 1 is reduced.

Optionally, as shown in FIGS. 4 and 5, at least one of the first connecting portion 11, the second connecting portion 12 and the third connecting portion 13 is provided with a reinforcing rib 16.

For example, the first connecting portion 11, the second connecting portion 12 and the third connecting portion 13 are provided with a recessed portion, and the recessed portion forms the reinforcing rib 16. The recessed portion may be in a shape of a rectangle, a triangle, a circle, an ellipse or the like.

By providing the reinforcing rib 16 in at least one of the first connecting portion 11, the second connecting portion 12 and the third connecting portion 13, the stiffness of the fender bracket 1 itself can be further improved, and the impact on the appearance size of the entire vehicle due to the deformation of the fender bracket is avoided.

In some embodiments, as shown in FIGS. 2 to 5, the third connecting portion 13 is provided with a longitudinal beam connecting hole 131 configured to be connected to the longitudinal beam 20, the longitudinal beam connecting hole 131 is configured for the connecting member 3 to pass through, and a size of the longitudinal beam connecting hole 131 is larger than a diameter of the connecting member 3. The connecting member 3 may be a bolt, a screw, etc.

For example, the longitudinal beam connecting hole 131 extends in the left-right direction, and the size of the longitudinal beam connecting hole 131 is larger than the diameter of the connecting member 3, so that the position of the connecting member 3 in the up-down direction and front-rear direction can be adjusted, thus the position of the fender 2 in the up-down direction and front-rear direction can be adjusted.

By setting the size of the longitudinal beam connecting hole 131 to be larger than the diameter of the connecting member 3, the position of the connecting member 3 can be adjusted in a direction perpendicular to a depth of the longitudinal beam connecting hole 131, thus the position of the fender 2 is adjusted in the direction perpendicular to the depth of the longitudinal beam connecting hole 131, and the gap between the fender 2 and the other part or component is ensured. For example, the gap between the fender 2 and an engine cover is ensured.

Optionally, as shown in FIGS. 4 and 5, the first connecting portion 11 is connected to the first fixing portion 211 by a first fastener. The first connecting portion 11 is provided with a first connecting hole 111 configured for the first fastener to pass through, and the size of the first connecting hole 111 is larger than the diameter of the first fastener. The first fastener may be a bolt, a screw, etc.

For example, the first connecting hole 111 extends in the up-down direction, and the size of the first connecting hole 111 is larger than the diameter of the first fastener, so that the position of the first fastener can be adjusted in the left-right direction and the front-rear direction, and thus the position of the fender 2 is adjusted in the left-right direction and the front-rear direction.

By setting the size of the first connecting hole 111 to be larger than the diameter of the first fastener, the position of the first fastener in a direction perpendicular to the depth of the first connecting hole 111 can be adjusted, thus the position of the fender 2 in a direction perpendicular to the depth of the first connecting hole 111 is adjusted, and the gap between the fender 2 and the other part or component is ensured. For example, the gap between the fender 2 and a component such as an engine cover, a front door, a front bumper, etc. is ensured.

Optionally, as shown in FIGS. 2, 4 and 5, the second connecting portion 12 is connected to the second fixing portion 221 by the second fastener 4. The second connecting portion 12 is provided with a second connecting hole 121 for the second fastener 4 to pass through, and the size of the second connecting hole 121 is larger than a diameter of the second fastener 4. The second fastener 4 may be a bolt, a screw, etc.

For example, the second connecting hole 121 extends in the up-down direction, and the size of the second connecting hole 121 is larger than the diameter of the second fastener 4, so that the position of the second fastener 4 can be adjusted in the left-right direction and the front-rear direction, and thus the position of the fender 2 is adjusted in the left-right direction and the front-rear direction.

By setting the size of the second connecting hole 121 to be larger than the diameter of the second fastener 4, the position of the second fastener 4 in a direction perpendicular to the depth of the second connecting hole 121 can be adjusted, thus the position of the fender 2 in a direction perpendicular to the depth of the second connecting hole 121 is adjusted, and the gap between the fender 2 and the other part or component is ensured. For example, the gap between the fender 2 and the component such as the engine cover, the front door, the front bumper, etc. is ensured.

In some embodiments, as shown in FIGS. 2 to 5, the fender bracket 1 defines a cavity 17, the cavity 17 has a first opening 171 and a second opening 172, the fender 2 blocks the first opening 171, and the second opening 172 is configured to face a headlamp of the vehicle.

By providing the cavity 17 in the fender bracket 1, and the second opening 172 of the cavity 17 is arranged to face the headlamp, the cavity 17 can be used as a collapsible space for the headlamp in case of a collision between the vehicle and a pedestrian, improving the protection of the pedestrian.

Optionally, as shown in FIG. 4, the first connecting portion 11 is provided with a headlamp connecting portion 112 configured to be connected to the headlamp. The headlamp connecting portion 112 may be a connecting hole.

In specific use, a mounting bracket of the headlamp is connected to the headlamp connecting portion 112 to realize the mounting and fixing of the headlamp. The mounting bracket of the headlamp may be connected to the headlamp connecting portion 112 by bolts, screws, etc.

By providing the headlamp connecting portion 112 at the first connecting portion 11, a mounting tolerance of the headlamp is consistent with a mounting tolerance of the fender 2, the mounting tolerance between the headlamp and the fender 2 is effectively ensured, the debugging difficulty in the process of mounting the headlamp is reduced, and the production efficiency of the vehicle is improved. In addition, the mounting point of the headlamp (the headlamp connecting portion 112) and the mounting point of the fender 2 are both integrated at the fender bracket 1, to reduce the development cost of parts and components of the vehicle, shorten the development cycle and production cycle of the fender assembly 10, and further improve the production efficiency of the vehicle.

Optionally, as shown in FIGS. 4 and 5, a side of the first connecting portion 11 facing the second opening 172 is provided with an avoiding portion 113 configured to avoid the headlamp.

By providing the avoiding portion 113, the gap between the headlamp and the fender bracket 1 is large, for example, the gap between the headlamp and the fender bracket 1 is larger than 40 mm. Thus, the headlamp can collapse towards the avoiding portion 113 in case of a collision between the vehicle and the pedestrian, improving the protection of the pedestrian.

In addition, when the fender bracket 1 is connected to the longitudinal beam 20 by the connecting member and the fender bracket 1 is connected to the fender 2 by the first fastener and the second fastener 4, a connecting tool can access the connecting member, the first fastener and the second fastener 4 through the avoiding portion 113 to screw the connecting member, the first fastener and the second fastener 4, thus it is convenient to carry out the connection of the fender bracket 1 and the longitudinal beam 20, and the connection of the fender bracket 1 and the fender 2, and the productivity of the vehicle is further improved.

Optionally, as shown in FIG. 4, an edge of the first connecting portion 11 facing the second opening 172 is inclined to form the avoiding portion 113.

For example, a front edge of the first connecting portion 11 is inclined gradually rearwards, so that the avoiding portion 113 is formed at the front side of the first connecting portion 11.

By setting the edge of the first connecting portion 11 facing the second opening 172 to be inclined to form the avoiding portion 113, it is convenient to process and manufacture the first connecting portion 11, thus it is convenient to process and manufacture the fender bracket 1, and it is conducive to reducing the cost of the fender assembly 10.

Optionally, as shown in FIG. 4, at least two headlamp connecting portions 112 are provided, and the at least one headlamp connecting portions 112 is connected to the first fixing portion 211.

For example, two the headlamp connecting portions 112 are provided, one of the headlamp connecting portions 112 is only used to be connected to the mounting bracket of the headlamp, and the other headlamp connecting portion 112 is not only used to be connected to the mounting bracket of the headlamp, but also used to be connected to the first fixing portion 211 of the fender 2.

At least one headlamp connecting portion 112 is connected to the first fixing portion 211, so that the at least one headlamp connecting portion 112 not only serves as a mounting point of the headlamp but also serves as a mounting point of the fender 2, i.e., the mounting point of the headlamp is integrated with the mounting point of the fender 2, the integration of the fender bracket 1 is further improved, the cost of the fender assembly 10 is reduced, and the cost of the vehicle is reduced.

In some embodiments, as shown in FIG. 4, the first connecting portion 11 is provided with a trim plate connecting portion 114 configured to be connected to a trim plate. The trim plate connecting portion 114 may be a connecting hole.

In specific use, the trim plate is connected to the trim plate connecting portion 114 to realize the mounting and fixing of the trim plate. The trim plate may be connected to the trim plate connecting portion 114 by bolts, screws, etc.

By providing the trim plate connecting portion 114 at the first connecting portion 11, the mounting point of the trim plate (the trim plate connecting portion 114) and the mounting point of the fender 2 are integrated at the fender bracket 1, so that the development cost of the part or component of the vehicle can be reduced, the development cycle and production cycle of the fender assembly 10 is shortened, and the production efficiency of the vehicle is further improved.

In some embodiments, as shown in FIG. 3, the fender 2 includes a fender body 21 and a fender reinforcing plate 22, the fender body 21 is connected to the fender reinforcing plate 22, and at least one of the first fixing portion 211 and the second fixing portion 221 is provided at the fender reinforcing plate 22.

By setting the fender 2 to include the fender body 21 and the fender reinforcing plate 22, and connecting the fender reinforcing plate 22 and the fender body 21, the stiffness of the fender 2 itself can be improved, the impact on the appearance size of the entire vehicle due to the deformation of the fender 2 is effectively avoided.

Optionally, as shown in FIG. 3, a part of the fender body 21 and a part of the fender reinforcing plate 22 are stacked and connected.

For example, as shown in FIG. 3, a part of the fender body 21 is contacted and welded to a part of the fender reinforcing plate 22 to realize the connection of the fender body 21 and the fender reinforcing plate 22.

By setting a part of the fender body 21 and a part of the fender reinforcing plate 22 to be stacked and connected, the stiffness of the fender 2 can be more effectively improved, and the impact on the appearance size of the entire vehicle due to the deformation of the fender 2 can be effectively avoided.

Optionally, as shown in FIG. 3, the part of the fender body 21 stacked with the fender reinforcing plate 22 forms a fender connecting portion 23. The first fixing portion 211 and the second fixing portion 221 are both provided at a side of the fender connecting portion 23 facing the fender bracket 1.

For example, as shown in FIG. 3, the first fixing portion 211 and the second fixing portion 221 are both provided at a right side of the fender connecting portion 23.

As a result, a condition of the existence of a three-layer arrangement of the fender body 21, the fender reinforcing plate 22 and the fender bracket 1 may be avoided, in particular that a condition of the existence of a three-layer welding of the fender body 21, the fender reinforcing plate 22 and the fender bracket 1 is avoided, thus the connection reliability between the fender body 21 and the fender reinforcing plate 22 and the connection reliability between the fender 2 and the fender bracket 1 are improved, and the reliability of the fender assembly 10 is further improved.

As shown in FIGS. 1 to 3, the vehicle of an embodiment of the present invention includes a fender assembly 10 and a longitudinal beam 20, the fender assembly 10 is the fender assembly 10 described in any one of above embodiments, and the fender bracket 1 is connected to the longitudinal beam 20. The vehicle may be a pure electric vehicle or a hybrid vehicle.

The vehicle of an embodiment of the present invention has the advantage of high production efficiency because it includes the fender assembly 10 described in any one of above embodiments.

Optionally, as shown in FIGS. 1 to 3, the longitudinal beam 20 is tube-shaped. In other words, a section of the longitudinal beam 20 is ring-shaped.

By providing the longitudinal beam 20 as a tube-shaped, the stiffness of the longitudinal beam 20 itself is great, thus the stiffness at the connection point between the longitudinal beam 20 and the fender bracket 1 can be improved, and the reliability of the vehicle can be enhanced.

Optionally, as shown in FIG. 3, the longitudinal beam 20 includes a longitudinal beam mounting plate 201 and a longitudinal beam reinforcing plate 202, the longitudinal beam reinforcing plate 202 and the longitudinal beam mounting plate 201 are stacked and connected, and the fender bracket 1 is connected to the longitudinal beam mounting plate 201.

For example, the longitudinal beam reinforcing plate 202 is welded to the longitudinal beam mounting plate 201.

By setting the longitudinal beam mounting plate 201 and the longitudinal beam reinforcing plate 202 to be stacked and connected and connecting the fender bracket 1 to the longitudinal beam mounting plate 201, the stiffness at the connection point of the longitudinal beam 20 and the fender bracket 1 can be improved, and the reliability of the vehicle can be enhanced.

Optionally, as shown in FIG. 3, the longitudinal beam 20 further includes a longitudinal beam connecting plate 203, the longitudinal beam connecting plate 203 is connected to the longitudinal beam mounting plate 201, and the longitudinal beam connecting plate 203 and the longitudinal beam mounting plate 201 form a tube-shaped structure.

For example, a section of the longitudinal beam connecting plate 203 and a section of the longitudinal beam mounting plate 201 both are L-shaped, and the longitudinal beam connecting plate 203 and the longitudinal beam mounting plate 201 form a tube-shaped structure.

When the processing and manufacturing of the longitudinal beam 20 is specifically carried out, the longitudinal beam mounting plate 201 and the longitudinal beam reinforcing plate 202 can be welded, and then the longitudinal beam connecting plate 203 can be welded to the longitudinal beam mounting plate 201.

The fender assembly 10 of an embodiment of the present invention ensures the stiffness at the fender 2 by forming the fender 2 and the fender mount 1 into a ring-shaped structure. By integrating the mounting of the fender 2, the mounting point of the headlamp, and the mounting point of the trim plate at the fender bracket 1, not only the tolerance accumulation can be reduced to ensure that the gap and flush between the fender 2 and other parts or components such as the headlamp etc. are matched, but also the development cost of the parts or components of the vehicle is greatly reduced, thereby shortening the development cycle and production cycle of the parts or components of the vehicle, and effectively improving the production efficiency of the vehicle and reducing the cost of the vehicle. The connection manner of the fender 2 and the fender bracket 1 ensures that the position of the fender 2 is adjustable, and the gap and flush of the fender 2 can be effectively ensured. The fender bracket 1 in a box-shaped structure as a whole can effectively improve the stiffness of the fender bracket 1 itself to avoid the ultimate impact on the appearance size of the vehicle because of deformation of the fender bracket 1 due to excessive force when the automated equipment is used.

## Claims

1. A fender assembly (10), comprising:
a fender bracket (1) comprising a first connecting portion (11) and a second connecting portion (12); and
a fender (2) comprising a first fixing portion (211) and a second fixing portion (221), the first fixing portion (211) being connected to the first connecting portion (11) and the second fixing portion (221) being connected to the second connecting portion (12);
wherein the fender bracket (1) and the fender (2) form a ring-shaped structure.

2. The fender assembly (10) according to claim 1, wherein the fender bracket (1) comprises a third connecting portion (13), the first connecting portion (11) is connected to the second connecting portion (12) by the third connecting portion (13), and the third connecting portion (13) is configured to be connected to a longitudinal beam (20).

3. The fender assembly (10) according to claim 2, wherein the first connecting portion (11), the second connecting portion (12) and the third connecting portion (13) are in a shape of a plate, an extension direction of the first connecting portion (11) and an extension direction of the second connecting portion (12) intersect an extension direction of the third connecting portion (13), and the first connecting portion (11) and the second connecting portion (12) are provided at the same side of the third connecting portion (13) in a thickness direction of the third connecting portion (13).

4. The fender assembly (10) according to claim 3, wherein the fender bracket (1) further comprises a first reinforcing portion (14) and a second reinforcing portion (15), the first reinforcing portion (14) is connected to the first connecting portion (11), the second reinforcing portion (15) is connected to the second connecting portion (12), and the first reinforcing portion (14) and the second reinforcing portion (15) are stacked and connected.

5. The fender assembly (10) according to claim 4, wherein the first reinforcing portion (14) is welded to the second reinforcing portion (15); and/or
the first reinforcing portion (14) is connected to a side of the first connecting portion (11) in a first direction, the first fixing portion (211) is connected to a side of the first connecting portion (11) in a second direction, the second reinforcing portion (15) is connected to a side of the second connecting portion (12) in the first direction, the second fixing portion (221) is connected to a side of the second connecting portion (12) in the second direction, and the first direction intersects the second direction.

6. The fender assembly (10) according to any one of claims 2 to 5, wherein at least one of the first connecting portion (11), the second connecting portion (12) and the third connecting portion (13) is provided with a reinforcing rib (16).

7. The fender assembly (10) according to any one of claims 2 to 7, wherein the third connecting portion (13) is provided with a longitudinal beam connecting hole (131) configured to be connected to the longitudinal beam (20), the longitudinal beam connecting hole (131) is configured for a connecting member (3) to pass through, and a size of the longitudinal beam connecting hole (131) is larger than a diameter of the connecting member (3).

8. The fender assembly (10) according to any one of claims 1 to 7, wherein the first connecting portion (11) is connected to the first fixing portion (211) by a first fastener, the first connecting portion (11) is provided with a first connecting hole (111) for the first fastener to pass through, a size of the first connecting hole (111) is larger than a diameter of the first fastener; and/or
the second connecting portion (12) is connected to the second fixing portion (221) by a second fastener (4), the second connecting portion (12) is provided with a second connecting hole (121) for the second fastener (4) to pass through, and a size of the second connecting hole (121) is larger than a diameter of the second fastener (4).

9. The fender assembly (10) according to any one of claims 1 to 8, wherein the fender bracket (1) defines a cavity (17), the cavity (17) has a first opening (171) and a second opening (172), the fender (2) blocks the first opening (171), and the second opening (172) is configured to face a headlamp of a vehicle.

10. The fender assembly (10) according to claim 9, wherein the first connecting portion (11) is provided with a headlamp connecting portion (112) configured to be connected to the headlamp.

11. The fender assembly (10) according to claim 10, wherein a side of the first connecting portion (11) facing the second opening (172) is provided with an avoiding portion (113) configured to avoid the headlamp; or
wherein at least two headlamp connecting portions (112) are provided, and at least one of the at least two headlamp connecting portions (112) is connected to the first fixing portion (211).

12. The fender assembly (10) according to any one of claims 1 to 11, wherein the first connecting portion (11) is provided with a trim plate connecting portion (114) configured to be connected to a trim plate.

13. The fender assembly (10) according to any one of claims 1 to 12, wherein the fender (2) comprises a fender body (21) and a fender reinforcing plate (22), the fender body (21) is connected to the fender reinforcing plate (22), and at least one of the first fixing portion (211) and the second fixing portion (221) is provided at the fender reinforcing plate (22);
wherein, optionally, a part of the fender body (21) and a part of the fender reinforcing plate (22) are stacked and connected; and
wherein, optionally, the part of the fender body (21) stacked with the fender reinforcing plate (22) forms a fender connecting portion (23), and the first fixing portion (211) and the second fixing portion (221) are both provided at a side of the fender connecting portion (23) facing the fender bracket (1).

14. A vehicle, comprising,
a fender assembly (10) according to any one of claims 1 to 13; and
a longitudinal beam (20), the fender bracket (1) being connected to the longitudinal beam (20).

15. The vehicle according to claim 14, wherein the longitudinal beam (20) is tube-shaped;
and/or
the longitudinal beam (20) comprises a longitudinal beam mounting plate (201) and a longitudinal beam reinforcing plate (202), the longitudinal beam reinforcing plate (202) and the longitudinal beam mounting plate (201) are stacked and connected, the fender bracket (1) is connected to the longitudinal beam mounting plate (201).
